# EUROPÄISCHE PATENTSCHRIFT

(11) **EP 4 390 338 B1**
(45) Veröffentlichungstag und Bekanntmachung des Hinweises auf die Patenterteilung: **02.04.2025**
(21) Anmeldenummer: 23216188.5
(22) Anmeldetag: 13.12.2023
(51) Int. Cl.: G01F 25/00

(54) **VERFAHREN ZUM KALIBRIEREN EINES FÖRDERGERÄTS UND DOSIERVORRICHTUNG**
METHOD FOR CALIBRATING A CONVEYOR DEVICE AND METERING DEVICE
PROCÉDÉ D'ÉTALONNAGE D'UN APPAREIL DE TRANSPORT ET DISPOSITIF DE DOSAGE

(30) Priorität: 20.12.2022 AT 509752022
(43) Veröffentlichungstag der Anmeldung: 26.06.2024
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(56) Entgegenhaltungen:
- EP-A1- 3 933 194
- EP-A2- 2 913 431
- EP-B1- 0 753 721
- US-B2- 7 916 299

## Beschreibung

Die Erfindung betrifft ein Verfahren zum Kalibrieren mindestens eines Fördergeräts zum Fördern von Flüssigkeit und/oder Luft einer Dosiervorrichtung zum Dosieren einer Flüssigkeit von mindestens einem Behälter zu mindestens einem Auslass, insbesondere zu mindestens einem Einspülverteiler und/oder mindestens einem Zielgerät, mittels des mindestens einen Fördergeräts, wobei ein Detektionsbereich mindestens eines Detektors zur Unterscheidung zwischen Flüssigkeit und Luft zwischen dem mindestens einen Behälter und dem mindestens einen Auslass angeordnet ist.

Verfahren eingangs erwähnter Art sind aus dem Dokument DE 10 2016 125 928 A1 bereits bekannt. Ein Detektor zur Unterscheidung von Flüssigkeit und/oder Luft ist stromabwärts einer Pumpe im Förderweg angeordnet. Der Detektor wird dazu verwendet, einen Leerstand in seinem Detektionsbereich zu detektieren. Ein Leerstandsignal kann an eine Steuerung übermittelt werden. Damit kann beispielsweise ein Vorratsmangel der Flüssigkeit detektiert werden.

Die Steuereinheit kann nach Erhalt eines Leerstandsignals eine Information über die Förderleistung der Pumpe ermitteln. Beispielsweise kann die Zeitdauer zwischen dem Beginn und dem Ende der Förderung eines bekannten Volumens von Flüssigkeit eines Depots zur Bestimmung der Förderleistung der Pumpe verwendet werden, wobei das Ende der Förderung durch das Leerstandsignal getriggert wird.

Eine Dosiervorrichtung kann unter Kenntnis der Förderleistung kalibriert werden.

Ein Nachteil der Erfindung ist, dass dem Depot ein fest definiertes Depotvolumen zugeordnet ist, welches die Steuereinheit zum Kalibrieren verwenden kann. Damit kann nur dieses eine Depot zum Kalibieren verwendet werden. Die Erfindung ist daher nur bedingt für austauschbare Produktbehälter, welche beispielsweise ein Reinigungsmittel enthalten, geeignet.

Die Schrift US 2011/0082595 A1 offenbart eine Dosiervorrichtung, bei welcher ein Datenträger, beispielsweise ein RFID-Tag, an einem chemischen Produkt angebracht ist. Auf dem Datenträger kann eine Information über das chemische Produkt gespeichert sein. Die Information kann von der Dosiervorrichtung ausgelesen werden und zur Kalibrierung der Dosiervorrichtung verwendet werden. Der Begriff "Kalibrierung" wird in der Schrift allgemein im Sinne von Anpassung von Dosierparametern verwendet. Das aktuelle Volumen des chemischen Produkts kann auf dem Datenträger geupdatet werden, sodass über das aktuelle Volumen buchgehalten wird. Damit kann ein Leerstand des chemischen Produkts antizipiert werden.

Nachteilig an dieser Erfindung ist, dass eine Anpassung von Dosierparametern und die Detektion eines Leerstands im Wesentlichen nur auf Basis der Daten durchgeführt wird. Für eine Kalibrierung eines Fördergeräts ist diese Herangehensweise zu ungenau.

Die US 7 916 299 B2 legt ein Verfahren zum Kalibrieren eines Fördergeräts einer Dosiervorrichtung zum Dosieren einer Flüssigkeit dar, welches im Hinblick auf ein zwischen Einlass und Auslass vorliegendes Totvolumen so ausgeführt ist, dass es nicht kalibriert werden muss.

Der Stand der Technik lässt offen, wie das Initialvolumen von Flüssigkeit in beliebigen, austauschbaren Behältern als Referenzvolumen zum Kalibrieren eines Fördergeräts verwendet werden kann.

Es ist daher eine Aufgabe der Erfindung, durch Verwendung des Referenzvolumens eines beliebigen Behälters eine Kalibrierung eines Fördergeräts einer Dosiervorrichtung zu realisieren.

Die Aufgabe wird gelöst durch ein Verfahren aus Anspruch 1 und eine Dosiervorrichtung aus Anspruch 10.

Im Folgenden wird mit dem Begriff "Zählspanne" eine Zeitspanne und/oder eine gewisse Anzahl an Pumpzyklen und/oder eine Anzahl an Standardvolumeinheiten gemeint. Mit dem Begriff "Zählpunkt" wird ein Zeitpunkt und/oder ein Zählstand der Anzahl der Pumpzyklen und/oder ein Zählstand von Standardvolumeinheiten gemeint.

Eine Zählspanne kann von einer Steuereinheit des Fördergeräts oder einer Aufzeichnungseinheit auf jede bekannte Art und Weise bestimmt werden. Beispielsweise kann das Intervall zwischen zwei Zählpunkten berechnet werden, wie beispielsweise die Berechnung einer Zeitspanne zwischen von einer Uhr aufgezeichneten Startzeitpunkt und Endzeitpunkt. Auch kann eine Fördergröße, beispielsweise die Zeit oder die Anzahl der Hübe oder ein Standardfördervolumen, während dem Fördern inkrementiert oder kumuliert werden. Es kann eine Fördergröße aufgezeichnet werden und im Nachhinein eine Zählspanne errechnet werden, beispielsweise durch gewichtete oder ungewichtete Integration.

Mit der Speicherung eines "Volumens" ist in der vorliegenden Anmeldung das Speichern eines Werts gemeint, welcher einen Rückschluss auf ein Volumen zulässt. Beispielsweise kann der Wert des Volumens in passenden Einheiten angegeben werden. Es kann alternativ oder zusätzlich ein Füllstand oder eine Füllhöhe (bspw. in einer Längeneinheit) angegeben werden. Auch kann ein prozentualer Anteil eines Gesamtvolumens oder einer Gesamtfüllhöhe angegeben werden.

Erfindungsgemäß ist im oder am mindestens einen Behälter mindestens ein Datenträger angeordnet, auf welchem das Initialvolumen an Flüssigkeit im Behälter gespeichert ist. Das erfindungsgemäße Verfahren weist die folgenden Verfahrensschritte auf:
- Auslesen des Initialvolumens vom mindestens einen Datenträger und Übertragung an die Dosiervorrichtung,
- Start des Förderns von Flüssigkeit und/oder Luft durch Ansprechen des mindestens einen Fördergeräts zu einem Startzählpunkt,
- Detektion eines Wechsels von Flüssigkeit auf Luft im Detektionsbereich durch den mindestens einen Detektor zu einem Luftdetektionszählpunkt,
- Verwendung des Initialvolumens als Referenzvolumen und Verwendung einer Kalibrierzählspanne auf Basis zumindest des Luftdetektionszählpunkts zum Kalibrieren des mindestens einen Fördergeräts.

Dadurch, dass auf dem Datenträger das individuelle Initialvolumen eines beliebig großen oder beliebig gefüllten Behälters eingespeichert ist, kann durch Auslesen des Initialvolumens vom Datenträger der Dosiervorrichtung das Initialvolumen zum Kalibrieren zugeführt werden. Die Dosiervorrichtung, insbesondere eine Steuereinheit, erlangt damit die Information des Initialvolumens eines beliebigen Behälters.

So kann ein beliebiger Behälter an die Dosiervorrichtung angeschlossen werden, wobei mit dem beliebigen Behälter ein Kalibrierungsverfahren durchführbar ist. Durch die Detektion eines Wechsels von Flüssigkeit auf Luft, insbesondere Luftbläschen, kann genau bestimmt werden, wann (oder nach wie vielen Pumpzyklen/Standardvolumeinheiten) das Initialvolumen gefördert wurde.

Zudem ist vorteilhaft, dass das Volumen nicht manuell eingetragen werden muss. Das Auslesen des Initialvolumens kann automatisch erfolgen.

Das Auslesen des Initialvolumens kann vor oder nach dem Start des Förderns oder der Detektion des Wechsels von Flüssigkeit auf Luft erfolgen.

Die Kalibrierung selbst kann durch die Verwendung des Initialvolumens als Referenzvolumen und die Verwendung einer Kalibrierzählspanne auf Basis zumindest des Luftdetektionszählpunkts zum Kalibrieren des mindestens einen Fördergeräts durchgeführt werden, insbesondere automatisch von einer Steuer- oder Logikeinheit.

Da der Luftdetektionszählpunkt durch die Messung mittels des Detektors und das Initialvolumen mittels des Auslesens des Datenträgers bekannt ist, kann eine genaue Kalibrierung unter Berücksichtigung des geförderten Initialvolumens und der Kalibrierzählspanne auf eine einem Fachmann bekannte Art und Weise durchgeführt werden. Die Steuereinheit weiß, wie lange (oder wie viele Pumpzyklen) das Fördergerät zum Fördern eines bestimmten Volumens braucht. Zum Kalibrieren kann ein Kalibrierwert errechnet werden, beispielsweise ein Volumen pro Umdrehung oder Hub des Fördergeräts oder ein Skalierungsfaktor.

In einem einfachen Ausführungsbeispiel kann eine Kalibrierzählspanne zwischen dem Startzählpunkt und dem Luftdetektionszählpunkt zum Kalibrieren des mindestens einen Fördergeräts verwendet werden.

Es kann ein Leervolumen zwischen dem Behälter, insbesondere dem Einlass des Förderwegs, und dem Detektionsbereich vorhanden sein, nachdem ein Leerstand detektiert wurde.

Wenn daraufhin, nach einem Behälterwechsel oder einer Auffüllung des Behälters, eine Kalibrierung durchgeführt wird, muss dieses Leervolumen zusätzlich zum Initialvolumen gefördert werden, bis ein Leerstand detektiert wird. Aufgrund des Leervolumens wird die Förderleistung des Fördergeräts daher unterschätzt, was eine Überdosierung in nachfolgenden Dosiervorgängen zur Folge hat.

Eine Lösung dieses Problems kann einerseits dadurch erfolgen, dass das Leervolumen klein gemacht wird. Dazu kann der Detektionsbereich möglichst nahe am Behälter oder am Einlass angeordnet sein.

Andererseits kann das Leervolumen kompensiert werden. Beide Lösungen sind als bevorzugte Ausführungsbeispiele der Erfindung im Folgenden angegeben.

In einem Ausführungsbeispiel der Erfindung sind die folgenden Verfahrensschritte zwischen dem Start des Förderns und der Detektion eines Wechsels von Flüssigkeit auf Luft vorgesehen:
- Detektion eines Wechsels von Luft auf Flüssigkeit im Detektionsbereich durch den mindestens einen Detektor zu einem Flüssigkeitsdetektionszählpunkt,
- Verwendung des Intervalls zwischen dem Flüssigkeitsdetektionszählpunkt und dem Luftdetektionszählpunkt als Kalibrierzählspanne.

Gemäß einer bevorzugten Ausführungsform des Verfahrens sind folgende Verfahrensschritte vorgesehen:
- Detektion eines Wechsels von Luft auf Flüssigkeit im Detektionsbereich durch den mindestens einen Detektor zu einem Flüssigkeitsdetektionszählpunkt,
- Verwendung des Intervalls zwischen dem Flüssigkeitsdetektionszählpunkt und dem Luftdetektionszählpunkt als Kalibrierzählspanne.

Durch die Detektion eines Wechsels von Luft auf Flüssigkeit in einem Detektionsbereich des Detektors kann die Zählspanne, insbesondere Zeitspanne oder Anzahl der Pumpzyklen, welche zur Förderung eines Leervolumens benötigt wird, berücksichtigt und/oder bestimmt werden (Leerförderzählspanne). Damit kann das Leervolumen kompensiert werden.

Der Flüssigkeitsdetektionszählpunkt kann zur Korrektur einer Kalibrierzählspanne (Kalibrierzeitspanne oder Anzahl der Pumpzyklen in einem Kalibrierintervall), welche zur Förderung des Initialvolumens benötigt wird, verwendet werden. Es kann beispielsweise die Kalibrierzählspanne um die Leerförderzählspanne verkürzt werden, sodass eine realistische, nicht unterschätzte Förderleistung des mindestens einen Fördergeräts ermittelt werden kann.

In diesem Sinn kann das Intervall zwischen dem Flüssigkeitsdetektionszählpunkt und dem Luftdetektionszählpunkt als Kalibrierzählspanne zum Kalibrieren des mindestens einen Fördergeräts verwendet werden.

Der Ort des Detektionsbereichs im Förderweg ist unter Anwendung dieses Verfahrens nicht mehr ausschlaggebend, obwohl die Größe des Leervolumens vom Ort des Detektionsbereichs abhängt.

Zwischen dem Flüssigkeitsdetektionszählpunkt und dem Luftdetektionszählpunkt wurde das Initialvolumen des mindestens einen Behälters, gefördert. Mittels des bekannten Initialvolumens und der Kalibrierzählspanne kann auf bekannte Weise eine Kalibrierung durchgeführt werden, beispielsweise durch Anpassung eines Kalibrierwerts, mittels welchem zum Beispiel gefördertes Volumen pro Zähleinheit (Zeiteinheit, Pumpzyklus) festgelegt wird.

Die Kalibrierungszählspanne wird so unabhängig vom Leervolumen im Förderweg und damit unabhängig von der Anordnung des Detektionsbereichs im Förderweg. Das Leervolumen kann kompensiert werden.

In einem bevorzugten Ausführungsbeispiel wird das Fördern von Flüssigkeit und/oder Luft durch Ansprechen des mindestens einen Fördergeräts aufgrund der Detektion eines Wechsels von Flüssigkeit auf Luft gestoppt. Es ist in so einem Fall von einem Leerstand auszugehen, sodass ein weiteres Fördern Luft ansaugen würde.

Gemäß einer bevorzugten Ausführungsform des Verfahrens ist der folgende Verfahrensschritt vorgesehen:
- Stopp des Förderns von Flüssigkeit und/oder Luft durch Ansprechen des mindestens einen Fördergeräts aufgrund der Detektion eines Wechsels von Flüssigkeit auf Luft.

In einem bevorzugten Ausführungsbeispiel ist vorgesehen, dass mehrere separate Dosiervorgänge innerhalb der Kalibrierungszählspanne durchgeführt werden. Es ist dabei vorzugsweise vorgesehen, dass das Fördern mittels des mindestens einen Fördergeräts vor der Detektion eines Wechsels von Flüssigkeit auf Luft im Detektionsbereich des Detektors zu einem Luftdetektionszählpunkt unterbrochen wird. Es ist also nicht notwendig, dass die Kalibrierzählspanne in einem Stück durchlaufen wird. Es können dagegen mehrere Dosiervorgänge während der Kalibrierungszählspanne durchgeführt werden.

Gemäß einer bevorzugten Ausführungsform des Verfahrens kann vorgesehen sein, dass mehrere separate Dosiervorgänge zwischen dem Startzählpunkt und dem Luftdetektionszählpunkt durchgeführt werden.

Dazu kann ein Zählerstand, beispielsweise in der Steuereinheit, gespeichert sein, der nach der Unterbrechung weiter inkrementiert wird. Der Zähler kann beispielsweise die Dosierzeit oder die Anzahl der Pumpzyklen inkrementieren.

Zusätzlich oder alternativ kann vorgesehen sein, dass ein Dosierprogramm mit Anweisungen zur Ausführung von Dosiervorgängen ausgeführt wird, wobei das Fördern der Flüssigkeit zur Kalibrierung im Zuge der Ausführung des Dosierprogramms vonstattengeht, insbesondere wenn im Betrieb ohnehin Flüssigkeit gefördert werden würde.

Gemäß einer bevorzugten Ausführungsform des Verfahrens kann vorgesehen sein, dass ein Dosierprogramm mit Anweisungen zum Ausführen von Dosiervorgängen ausgeführt wird, wobei das Fördern der Flüssigkeit zur Kalibrierung im Zuge der Ausführung des Dosierprogramms vonstattengeht, insbesondere wenn im Betrieb der Dosiervorrichtung ohnehin Flüssigkeit gefördert werden würde.

Damit kann die Kalibrierung während des Dosierbetriebs ausgeführt werden. Für den ersten Betrieb ohne Kalibrierung kann dazu eine leichte Überdosierung gewählt werden, sodass auch bei falsch voreingestelltem Fördergerät genügend Flüssigkeit gefördert wird.

In einem Ausführungsbeispiel wird das Verfahren zur Kalibrierung zur Nachkalibrierung nach dem Einsetzen eines, vorzugsweise jeden, weiteren Behälters verwendet. Das Initialvolumen des neuen Behälters kann ausgelesen werden.

Gemäß einer bevorzugten Ausführungsform des Verfahrens kann vorgesehen sein, dass das Verfahren zur Nachkalibrierung nach dem Einsetzen eines, vorzugsweise jeden, weiteren Behälters verwendet wird, besonders bevorzugt wobei ein Zählerstand der Steuereinheit vor der Nachkalibrierung resettet wird, oder wobei das Verfahren zur Initialkalibrierung nach der Installation oder einer Wartung der Dosiervorrichtung verwendet wird.

Bevorzugt kann vorgesehen sein, dass ein Zählerstand der Steuereinheit vor der Nachkalibrierung resettet wird. Beispielsweise kann eine Kalibrierzeit oder eine Anzahl an Pumpzyklen resettet werden.

Das Verfahren kann auch zur Initialkalibrierung nach der Installation oder einer Wartung der Dosiervorrichtung verwendet werden.

In einem Ausführungsbeispiel kann vorgesehen sein, dass der mindestens eine Behälter in flüssigkeitsleitende Verbindung mit dem mindestens einen Fördergerät gebracht wird, vorzugsweise durch lösbares Ankoppeln an die Dosiervorrichtung.

Gemäß einer bevorzugten Ausführungsform des Verfahrens kann vorgesehen sein, dass der mindestens eine Behälter in flüssigkeitsleitende Verbindung mit dem mindestens einen Fördergerät gebracht wird, vorzugsweise durch lösbares Ankoppeln an die Dosiervorrichtung.

In einem Ausführungsbeispiel ist mindestens ein Einlass des Förderwegs vorgesehen. Über den Einlass tritt Flüssigkeit in den Förderweg ein. Der Einlass kann beispielsweise das Ende einer Flüssigkeitsleitung, eines Ansaugrohrs oder einer Sauglanze sein. Bevorzugt wird der mindestens eine Einlass im oder am mindestens einen Behälter angeordnet, sodass Flüssigkeit vom Behälter zum Auslass förderbar ist.

Gemäß einer bevorzugten Ausführungsform des Verfahrens kann vorgesehen sein, dass mindestens ein Einlass des Förderwegs vorgesehen ist, vorzugsweise wobei der mindestens eine Einlass im oder am mindestens einen Behälter angeordnet wird.

In einem Ausführungsbeispiel ist der Detektionsbereich des Detektors zwischen dem mindestens einen Einlass und dem mindestens einen Fördergerät im Förderweg zwischen Einlass und Auslass angeordnet, also stromaufwärts des Fördergeräts.

Gemäß einer bevorzugten Ausführungsform des Verfahrens kann vorgesehen sein, dass der Detektionsbereich des mindestens einen Detektors
- zwischen dem mindestens einen Einlass und dem mindestens einen Fördergerät im Förderweg zwischen Einlass und Auslass angeordnet ist, und/oder
- in dem dem mindestens einen Einlass angrenzenden Viertel, bevorzugt Achtel und besonders bevorzugt Zehntel des Förderwegs zwischen Einlass und Auslass angeordnet ist, und/oder
- weniger als 150 Zentimeter, bevorzugt weniger als 100 Zentimeter, besonders bevorzugt weniger als 50 Zentimeter vom mindestens einen Einlass entfernt im Förderweg angeordnet ist.

In einem Ausführungsbeispiel ist der Detektionsbereich in dem dem mindestens einen Einlass angrenzenden Viertel bevorzugt, Achtel und besonders bevorzugt Zehntel des Förderwegs zwischen Einlass und Auslass angeordnet.

In einem Ausführungsbeispiel ist der Detektionsbereich weniger als 150 Zentimeter, bevorzugt weniger als 100 Zentimeter, besonders bevorzugt weniger als 50 Zentimeter vom mindestens einen Einlass entfernt im Förderweg angeordnet.

Der Förderweg kann länger als ein Meter, bevorzugt länger als drei Meter und besonders bevorzugt länger als sechs Meter sein. Insbesondere kann der Auslass in einem anderen Raum als der Einlass angeordnet sein, zum Beispiel, wenn die Flüssigkeitsbehälter in einem anderen Raum wie ein Zielgerät, beispielsweise eine Waschmaschine, angeordnet sind.

Damit ist das Leervolumen relativ, insbesondere relativ zum restlichen Volumen im Förderweg oder relativ zu einem Behältervolumen, klein gehalten, sodass Förderzeit und Energie gespart wird.

In einem Ausführungsbeispiel wird der mindestens eine Behälter an eine Andockeinheit, insbesondere mit einer Öffnung des mindestens einen Behälters, lösbar angekoppelt. Bevorzugt ist im mindestens einen Behälter ein Einsatz mit einem Saugrohr angeordnet, wobei das Ende des Saugrohrs mindestens einen Einlass bildet. Ein Saugrohr kann aber auch an der Andockeinheit selbst angeordnet sein. Ein Behälter kann damit flexibel ausgetauscht und an die Dosiervorrichtung angekoppelt werden.

Gemäß einer bevorzugten Ausführungsform des Verfahrens kann vorgesehen sein, dass der mindestens eine Behälter an eine Andockeinheit, insbesondere mit einer Öffnung des mindestens einen Behälters, lösbar angekoppelt wird, vorzugsweise wobei mindestens einen Behälter ein Einsatz mit einem Saugrohr angeordnet ist, wobei das Ende des Saugrohrs mindestens einen Einlass des Förderwegs bildet, vorzugsweise wobei der Detektionsbereich des mindestens einen Detektors in der Andockeinheit angeordnet ist.

Vorzugsweise ist der Detektionsbereich des mindestens einen Detektors, insbesondere der mindestens eine Detektor selbst, in einer Andockeinheit angeordnet. Dadurch, dass der Detektionsbereich in der Andockeinheit angeordnet ist, ist der Detektionsbereich nahe am mindestens einen Einlass angeordnet, womit das Leervolumen relativ klein ist. Baulich ist eine Andockeinheit der optimale Platz für den Detektor, da er so nicht zusätzlich an eine Flüssigkeitsleitung angebracht werden muss.

In einem alternativen Ausführungsbeispiel kann der Detektionsbereich des mindestens einen Detektors in oder an einer Sauglanze oder an einer Flüssigkeitsleitung des Förderwegs angeordnet sein.

Gemäß einer bevorzugten Ausführungsform des Verfahrens kann vorgesehen sein, dass der Detektionsbereich des mindestens einen Detektors in oder an einer Sauglanze oder an einer Flüssigkeitsleitung des Förderwegs angeordnet ist.

In einem bevorzugten Ausführungsbeispiel kann das mindestens eine Fördergerät als steuerbare Pumpe, insbesondere Schlauchquetschpumpe oder Membranpumpe oder Kolbenpumpe oder Zahnradpumpe oder Exzenterschneckenpumpe, ausgebildet sein. Die Pumpe kann mittels einer Steuereinheit gesteuert werden, wobei die Steuereinheit eine Anzahl der Pumpzyklen, insbesondere Umdrehungen oder Hübe, pro Zeiteinheit vorgibt. Damit kann die Fördermenge pro Zeit eingestellt werden.

Alternativ kann das mindestens eine Fördergerät als steuerbares Ventil ausgebildet sein, wobei die Flüssigkeit mithilfe der Schwerkraft vom Einlass zum Auslass strömt. Das Ventil kann mittels einer Steuereinheit mehr oder weniger geöffnet werden, womit die Fördermenge pro Zeit eingestellt werden kann.

Gemäß einer bevorzugten Ausführungsform des Verfahrens kann vorgesehen sein, dass das mindestens eine Fördergerät
- als steuerbare Pumpe, insbesondere Schlauchquetschpumpe oder Membranpumpe oder Kolbenpumpe oder Zahnradpumpe oder Exzenterschneckenpumpe, und/oder
- als steuerbares Ventil
ausgebildet ist.

Der mindestens eine Detektor kann auf beliebige Art und Weise ausgebildet sein. Er muss nur dazu geeignet sein, die Anwesenheit von Flüssigkeit im Detektionsbereich von der Anwesenheit von Luft, insbesondere Luftbläschen, zu unterscheiden.

Der mindestens eine Detektor kann als optischer Sensor ausgebildet sein. Flüssigkeit und Luft weisen unterschiedliche optische Eigenschaften, wie Transmittivität, Reflektivität oder Brechungsindex, auf und können daher dadurch unterschieden werden, dass von einer Lichtquelle Licht in den Detektionsbereich gesendet wird und das reflektierte oder transmittierte Licht vom optischen Sensor detektiert wird.

Beispielsweise kann ein transluzenter Flüssigkeitskanal der Andockeinheit oder ein transluzenter Schlauch vom Licht durchschienen werden.

Ähnlich kann der Detektor auch als Ultraschallsensor oder Sensor für elektromagnetische Wellen, welche eine Unterscheidung von Flüssigkeit und Luft erlauben, ausgebildet sein.

Alternativ kann der mindestens eine Detektor als Schwimmer mit Schalter ausgebildet sein. Der Schalter ist vorzugsweise kontaktlos, insbesondere als Reed-Schalter, ausgebildet.

Gemäß einer bevorzugten Ausführungsform des Verfahrens kann vorgesehen sein, dass der mindestens eine Detektor
- als optischer Sensor ausgebildet ist, und/oder
- als Sensor für elektromagnetische Wellen, und/oder
- als Ultraschallsensor, und/oder
- als Schwimmer mit Schalter
ausgebildet ist.

Es ist auch denkbar, dass der mindestens eine Detektor auf eine andere Art, welche geeignet zur Unterscheidung von Flüssigkeit und Luft ist, ausgebildet ist, beispielsweise als Leitfähigkeitssensor.

In einem bevorzugten Ausführungsbeispiel ist der mindestens eine Datenträger als elektronischer Datenträger, insbesondere als RFID-Transponder, ausgebildet. RFID-Transponder können einfach kontaktlos ausgelesen oder beschrieben werden.

In einem alternativen Ausführungsbespiel kann der mindestens eine Datenträger als gedruckter Datenträger, insbesondere als Barcode oder QR-Code ausgeformt sein. Gedruckte Datenträger sind besonders kostengünstig.

Gemäß einer bevorzugten Ausführungsform des Verfahrens kann vorgesehen sein, dass der mindestens eine Datenträger
- als elektronischer Datenträger, insbesondere als RFID-Transponder, und/oder
- als gedruckter Datenträger, insbesondere als Barcode oder QR-Code,
ausgeformt ist.

Es kann vorgesehen sein, dass der mindestens eine Datenträger mittels eines Lesegeräts der Dosiervorrichtung, insbesondere kontaktlos, ausgelesen wird. Das Lesegerät kann als RFID-Lesegerät zum Lesen von RFID-Transpondern oder optischer Scanner zum Lesen von Barcodes oder QR-Codes ausgebildet sein.

Es kann vorgesehen sein, dass der mindestens eine Datenträger mittels mindestens eines Schreibgeräts der Dosiervorrichtung, insbesondere kontaktlos, beschrieben wird. Bevorzugt ist das Lesegerät als Lese-Schreib-Gerät ausgebildet. Das Schreibgerät bzw. Lese-Schreib-Gerät kann insbesondere die RFID-Technlogogie benutzen.

Es kann bevorzugt vorgesehen sein, dass das Restvolumen an Flüssigkeit im Behälter auf den Datenträger geschrieben wird. Bei einem erneuten Anschließen an eine andere oder dieselbe Dosiervorrichtung kann das gespeicherte Restvolumen als Initialvolumen für ein Kalibrierverfahren verwendet werden.

In einem Ausführungsbeispiel kann das mindestens eine Fördergerät von mindestens einer Steuereinheit gesteuert werden, vorzugsweise wobei die mindestens eine Steuereinheit als Zentralsteuereinheit, welche mindestens ein Fördergerät und/oder mindestens ein Zielgerät und/oder ein mindestens ein Ventil steuert, ausgebildet ist.

Es kann vorgesehen sein, dass der Detektor ein Signal an die Steuereinheit sendet, wenn ein Wechsel von Flüssigkeit auf Luft, oder umgekehrt, detektiert wird. Mithilfe dieses Signals kann die Steuereinheit den Detektionszählpunkt, beispielsweise den Detektionszeitpunkt und/oder einen Zählerstand des Fördergeräts, des entsprechenden Ereignisses bestimmen und speichern und/oder weiterverarbeiten.

In einem bevorzugten Ausführungsbeispiel erfolgt die Detektion eines Wechsels von Flüssigkeit auf Luft oder von Luft auf Flüssigkeit, wenn ein Mittelwert eines Detektorsignals, insbesondere einer Lichtintensität bei einem optischen Detektor, über einen bestimmten Detektionszeitraum einen bestimmten Schwellwert über- oder unterschreitet.

Flüssigkeit zu detektieren heißt in der Praxis "überwiegend Flüssigkeit zu detektieren" und Luft zu detektieren heißt in der Praxis "überwiegend Luft zu detektieren", wobei "überwiegend" auf einen bestimmten Schwellwert bezogen ist.

Auf Basis dieser Unterscheidung können entsprechende Signale ausgegeben werden und an eine Logikeinheit der Andockeinheit und/oder eine Steuereinheit des Fördergeräts übermittelt werden.

In einem Ausführungsbeispiel kann die Detektion eines Wechsels von Flüssigkeit auf Luft erst berücksichtigt werden, wenn eine bestimmte Anlaufzeit, insbesondere gezählt ab dem Startzählpunkt, abgelaufen ist. Damit wird eine Leerstanddetektion und ein Abbruch des Förderns bzw. der Kalibrierzählspanne erst nach einer Anlaufzeit berücksichtigt, nach welcher ein Leerstand realistisch erscheint.

In einem Ausführungsbeispiel kann die Detektion eines Wechsels von Flüssigkeit auf Luft erst berücksichtigt werden, wenn das Restvolumen an Flüssigkeit im mindestens einen Behälter ein bestimmtes Grenzvolumen, beispielsweise 20 Prozent, insbesondere 10 Prozent, des Initialvolumens, unterschreitet. Dadurch kann ein Leerstand erst dann detektiert werden, wenn er auch realistischerweise vorliegen kann.

Unregelmäßigkeiten während des Anlaufens können damit berücksichtigt werden.

Es kann vorgesehen sein, dass das Restvolumen an Flüssigkeit im mindestens einen Behälter in der mindestens einen Dosiervorrichtung, insbesondere in der Steuereinheit, und/oder in einem Datenträger des mindestens einen Behälters gespeichert und nach einem Fördern aktualisiert wird. Damit kann über das Restvolumen abgeschätzt werden, ohne es direkt messen zu müssen.

Wenn das Restvolumen in den Datenträger des mindestens einen Behälters gespeichert wird, kann bei einem erneuten Anschließen an eine andere oder dieselbe Dosiervorrichtung das gespeicherte Restvolumen als Initialvolumen für ein Kalibrierverfahren verwendet werden.

Zusätzlich oder alternativ kann das Restvolumen an Flüssigkeit im mindestens einen Behälter mittels eines Sensors gemessen werden, beispielsweise mittels eines Laufzeitsensors.

Eine erfindungsgemäße Dosiervorrichtung weist Mittel auf, das beschriebene Kalibrierverfahren auszuführen.

In einem Ausführungsbeispiel der Dosiervorrichtung ist mindestens ein Einlass des Förderwegs vorgesehen, wobei der mindestens eine Einlass im oder am mindestens einen Behälter angeordnet ist. Alternativ oder zusätzlich kann vorgesehen sein, dass der Detektionsbereich in dem mindestens einen Einlass angrenzenden Viertel, bevorzugt Achtel und besonders bevorzugt Zehntel, des Förderwegs angeordnet ist.

Der mindestens eine Behälter kann mittels einer Andockeinheit an die Dosiervorrichtung ankoppelbar sein. Zudem kann vorgesehen sein, dass im mindestens einen Behälter ein Einsatz angeordnet ist, besonders bevorzugt wobei der Datenträger am Einsatz angeordnet ist.

Die Dosiervorrichtung kann mindestens ein Lesegerät zum, insbesondere berührungslosen, Lesen des Datenträgers aufweisen. Mittels des Lesegeräts kann das Initialvolumen ausgelesen werden. Beim Lesegerät kann es sich beispielsweise um ein RFID-Lesegerät oder einen optischen Scanner zum Lesen eines Barcodes oder eines QR-Codes handeln.

Das Lesegerät kann als Schreib-Lese-Gerät, insbesondere als RFID-Schreib-Lese-Gerät ausgeformt sein. Insbesondere kann das Restvolumen an Flüssigkeit des Behälters vor dem Entfernen des Behälters auf den Datenträger geschrieben werden. Das Restvolumen kann als Initialvolumen für zukünftige Kalibriervorgänge mit Beteiligung des Behälters verwendet werden.

In einem bevorzugten Ausführungsbeispiel weist die Dosiervorrichtung mindestens zwei Behälter und mindestens zwei Fördergeräte und jeweils ein Fördergerät pro Behälter auf, vorzugsweise wobei die Flüssigkeit mittels des Fördergeräts in einen Einspülverteiler förderbar ist, besonders bevorzugt wobei die Flüssigkeit vom Einspülverteiler über ein Spülmedium, insbesondere Wasser, weiter zum mindestens einen Zielgerät förderbar ist. Jeder Behälterinhalt kann zur Kalibrierung "seines" Fördergeräts verwendet werden.

Als Flüssigkeit wird vorzugsweise eine chemische Lösung, welche insbesondere zur Reinigung von Wäsche, Geschirr oder anderen Objekten verwendbar ist. Auch können Bleichmittel oder Klarspüler als Flüssigkeit angesehen werden. Es kann aber auch ein Spülmedium, beispielsweise Wasser, als Flüssigkeit im Sinne der vorliegenden Anmeldung angesehen werden.

Weitere Ausführungsformen und Details sind den Zeichnungen zu entnehmen. Dabei zeigen:
- Fig. 1a: Behälter mit verschiedenen Initialvolumina,
- Fig. 1b: Behälter mit verschiedenen Initialvolumina angedockt an eine Dosiervorrichtung,
- Fig. 2: Dosiervorrichtung mit Andockeinheit, Einspülverteiler und Zielgerät,
- Fig. 3: Andockeinheit mit Detektor und Lesegerät,
- Fig. 4a: Einsatz für den Behälter mit Saugrohr,
- Fig. 4b: Behälter mit Einsatz,
- Fig. 4c: Detailansicht des in den Behälter eingesetzten Einsatzes,
- Fig. 5: an eine Andockeinheit angekoppelter Behälter mit Einsatz,
- Fig. 6a: Förderweg mit Leervolumen nach einer Detektion eines Wechsels von Flüssigkeit auf Luft mit einem Detektionsbereich nahe am Einlass,
- Fig. 6b: Förderweg mit Leervolumen nach einer Detektion eines Wechsels von Flüssigkeit auf Luft mit einem Detektionsbereich nahe am Auslass,
- Fig. 7a: Förderweg ohne Leervolumen nach dem Fördern mit einem Detektionsbereich nahe am Einlass,
- Fig. 7b: Förderweg ohne Leervolumen nach dem Fördern mit einem Detektionsbereich nahe am Auslass,
- Fig. 8: Zählspannen und Zählpunkte des Kalibrierverfahrens in einer ersten Ausführungsform,
- Fig. 9a: Zählspannen und Zählpunkte des Kalibrierverfahrens in einer zweiten Ausführungsform, und
- Fig. 9b: Unterbrechung des Dosierens während des Kalibrierverfahrens der zweiten Ausführungsform.

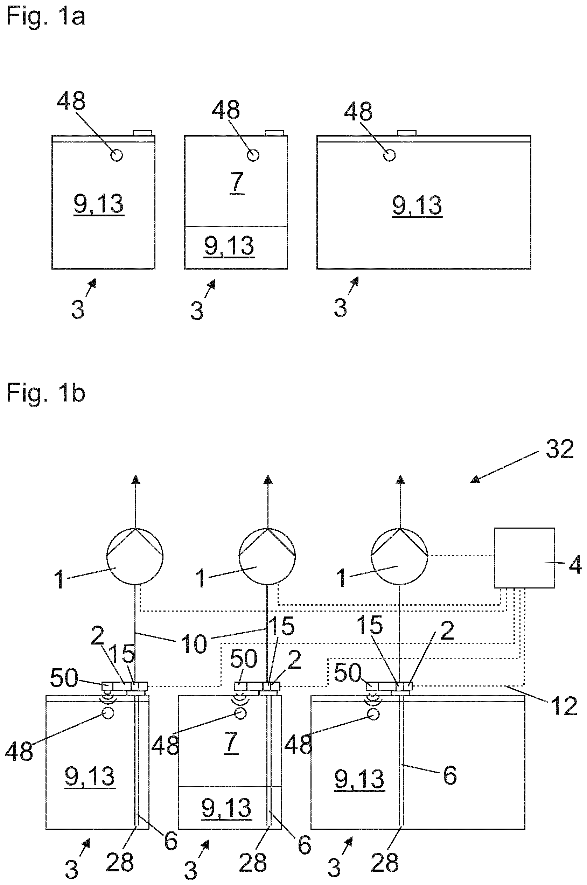

Die Fig 1a zeigt drei Behälter, welche jeweils mit Flüssigkeit 9 gefüllt sind. Als Flüssigkeit 9 kann insbesondere ein Reinigungsmittel oder ein Weichmacher für eine Waschmaschine oder ein Geschirrspülmittel oder ein Klarspüler für einen Geschirrspüler vorgesehen sein. Die Behälter 3 sollen an eine Dosiervorrichtung 32 angeschlossen zu werden, um die Flüssigkeiten 9 gezielt an einen Einspülverteiler 46 oder mindestens ein Zielgerät 49 abzugeben.

Nach dem Anschließen eines Behälters 3 soll das die Flüssigkeit 9 aus dem Behälter fördernde Fördergerät 1 der Dosiervorrichtung 32 kalibriert werden. Dazu kann die gesamte Flüssigkeit 9 des jeweiligen Behälters 3 gefördert werden und als Referenzvolumen zur Kalibrierung verwendet werden. Die gesamte Flüssigkeit 9 beim Start der Kalibrierung bzw. beim Anschließen an die Dosiervorrichtung 32 wird als Initialvolumen 13 bezeichnet.

Der linke Behälter ist nahezu voll mit Flüssigkeit 9. Sein Initialvolumen 13 entspricht nahezu dem Behältervolumen.

Der mittlere Behälter 3 hat die gleiche Größe wie der linke Behälter ist jedoch beim Start der Kalibrierung bzw. beim Anschließen an die Dosiervorrichtung 32 nicht voll. Sein Initialvolumen 13 ist daher geringer als jenes des linken Behälters 3. Das kann beispielsweise der Fall sein, wenn der Behälter 3 bereits verwendet wurde und dann an einer anderen oder der gleichen Dosiervorrichtung 32 wiederverwendet wird.

Der linke Behälter 3 ist größer als der mittlere und der linke Behälter 3 und nahezu voll gefüllt. Sein Initialvolumen 13 ist daher größer als jenes des linken und des mittleren Behälters 3.

Die jeweils verschiedenen Initialvolumina 13 sind auf einem Datenträger 48 gespeichert, wobei der Datenträger 48 am oder im Behälter 3 angeordnet ist. Beim Datenträger 48 kann es sich bevorzugt um einen RFID-Tag oder -Transponder (radiofrequency identification tag) handeln. Beim Datenträger 48 kann es sich alternativ um einen QR- oder Barcode handeln, welcher das Initialvolumen 13 mittels eines gedruckten Codes speichert.

Damit kann das Initialvolumen 13 verschiedener Behälter 3 und Füllzustände automatisch ausgelesen werden.

Die drei Behälter 3 können, wie in Fig. 1b gezeigt, an eine Dosiervorrichtung 32 auf beliebige Art und Weise angeschlossen werden. Zur Kalibrierung der Dosiervorrichtung 32 wird das Initialvolumen 13 vom mindestens einen Datenträger 48 ausgelesen und an die Dosiervorrichtung 32 übertragen. Damit ist das jeweilige Initialvolumen 13 einer Steuereinheit 4 bekannt.

Zum Kalibrieren des Fördergeräts 1 wird zusätzlich die Zählspanne, insbesondere eine Zeitspanne oder eine Anzahl an Pumpzyklen, welche zum Fördern des Initialvolumens 13 benötigt wurde, bestimmt.

Hierzu wird das Fördern von Flüssigkeit 9 und/oder Luft 7 durch Ansprechen des mindestens einen Fördergeräts 1 zu einem Startzählpunkt 33 gestartet. Nachdem das gesamte Volumen an Flüssigkeit 9 gefördert wurde, wird ein Wechsel von Flüssigkeit 9 auf Luft 7 im Detektionsbereich 14 des Detektors 15 zu einem Luftdetektionszählpunkt 39 detektiert.

Aus der Kenntnis des Luftdetektionszählpunkts 39 kann auf die Zeitspanne oder die Anzahl der Hübe die benötigt wurde/wurden, um das Initialvolumen 13 zu Fördern, rückgeschlossen werden und somit eine Kalibrierung des Fördergeräts 1 durchgeführt werden. Der Luftdetektionszählpunkt 39 kann daher in Kombination mit dem Initialvolumen 13 zum Kalibrieren des Fördergeräts 1 verwendet werden.

Insbesondere kann eine Kalibrierzählspanne 42 zwischen dem Startzählpunkt 33 und dem Luftdetektionszählpunkt 39 zum Kalibrieren des mindestens einen Fördergeräts 1 verwendet werden, wobei das Initialvolumen 13 als Referenzvolumen verwendet wird.

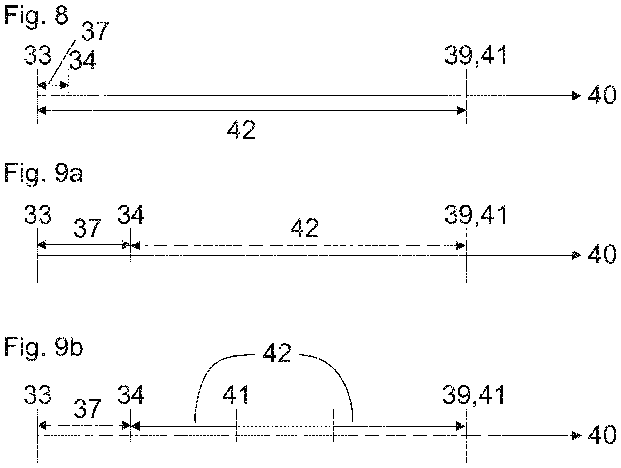

In einem alternativen Ausführungsbeispiel kann ein Leervolumen zwischen dem Einlass 28 des Förderwegs 47 und dem Detektionsbereich 14 des Detektors 15 berücksichtigt werden. Die beiden Ausführungsbeispiele des Kalibrierverfahrens sind in den Figuren 8, 9a und 9b gegenübergestellt.

Die Fig. 1b zeigt eine Dosiervorrichtung 32 zum Dosieren einer Flüssigkeit 9, welche sich in mehreren Behältern 3 befindet. Die Flüssigkeit 9 kann durch mehrere Andockeinheiten 2, welche jeweils an einer Öffnung des Behälters 3 lösbar befestigt sind, mittels eines Fördergeräts 1, insbesondere einer Pumpe, angesaugt werden. Die Flüssigkeit 9 kann vom Fördergerät 1 weiter in die Richtung eines Zielgeräts 45, insbesondere einer Waschmaschine oder eines Geschirrspülers, gefördert werden. Es kann dabei vorgesehen sein, dass die Flüssigkeit 9 mittels des Fördergeräts 1 nicht direkt bis zum Zielgerät 45 gefördert wird. Dagegen kann vor dem Zielgerät 45 ein Einspülverteiler 46 vorgesehen sein, in welchem verschiedene Flüssigkeiten 9 vermischt und mittels eines Spülmediums weiter an ein Zielgerät 45 gefördert werden.

Sowohl das Fördergerät 1 als auch die Andockeinheit 2 sind über eine Datenleitung 12 mit einer Steuereinheit 4, insbesondere einer Zentralsteuereinheit, verbunden. Die Steuereinheit 4 kann die gesamte Dosiervorrichtung 32 steuern und dient als zentrale Recheneinheit für die Dosiervorrichtung 32. Dazu steht die Steuereinheit 4 über Datenleitungen 12 in Datenverbindung mit dem Fördergerät 1 und der Andockeinheit 2.

In der Andockeinheit 2 ist der Detektor 15 oder zumindest der Detektionsbereich 14 zur Unterscheidung von Flüssigkeit 9 und Luft 7 angeordnet. In der Andockeinheit 2 ist zudem eine Logikeinheit 11 angeordnet, welche unter anderem Daten des Detektors 15 weiterleitet.

In der Andockeinheit 2 ist zudem das Lesegerät 50 zum Auslesen des Initialvolumens 13 vom Datenträger 48 am Behälter 3 angeordnet. Bevorzugt erfolgt das Auslesen kontaktlos, beispielsweise mittels RFID-Technologie.

In Fig. 1b weist jede Andockeinheit 2 ihr eigenes Lesegerät 50 auf, sodass die Initialvolumina 13 individuell eingelesen werden können. Die jeweiligen Initialvolumina 13 können zum Kalibrieren des jeweiligen Fördergeräts 1 verwendet werden. Es kann alternativ ein zentrales Lesegerät 50 für alle Datenträger 48 vorgesehen sein.

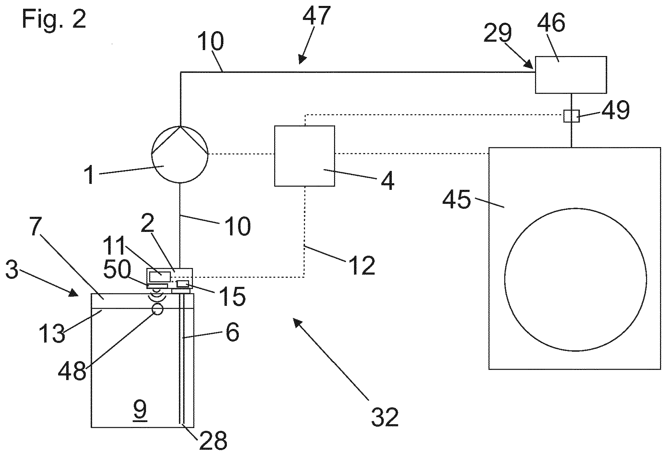

Die Fig. 2 zeigt eine Dosiervorrichtung 32 mit nur einem Behälter 3. Wird der Behälter 3 ausgetauscht, kann das, möglicherweise vom ersten Behälter 3 verschiedene, Initialvolumen 13 mittels des Lesegeräts 50 ausgelesen werden.

In der Fig. 2 ist zudem der gesamte Förderweg 47 ersichtlich, der vom Einlass 28 am Ende eines Saugrohrs 6 bis zu einem Auslass 29 bei einem Einspülverteiler 46 reicht. Im Einspülverteiler 46 können die Förderwege 47 mehrerer Fördergeräte 1 enden. Dort können die Flüssigkeiten zusammen mithilfe eines Spülmediums, beispielsweise Wasser, zu einem Zielgerät 45, beispielsweise einer Waschmaschine oder ein Geschirrspüler, weitergeleitet werden.

Zwischen Einspülverteiler 46 und Zielgerät 45 kann sich ein steuerbares Ventil 49 befinden. Das Ventil 49 kann als Verteilerventil ausgebildet sein und eine Auswahl von einem von mehreren Zielgeräten 45 ermöglichen.

Zu den Figuren 1b und 2 sei angemerkt, dass die Datenleitungen 12 auch kabellos über Funk ausgebildet sein können.

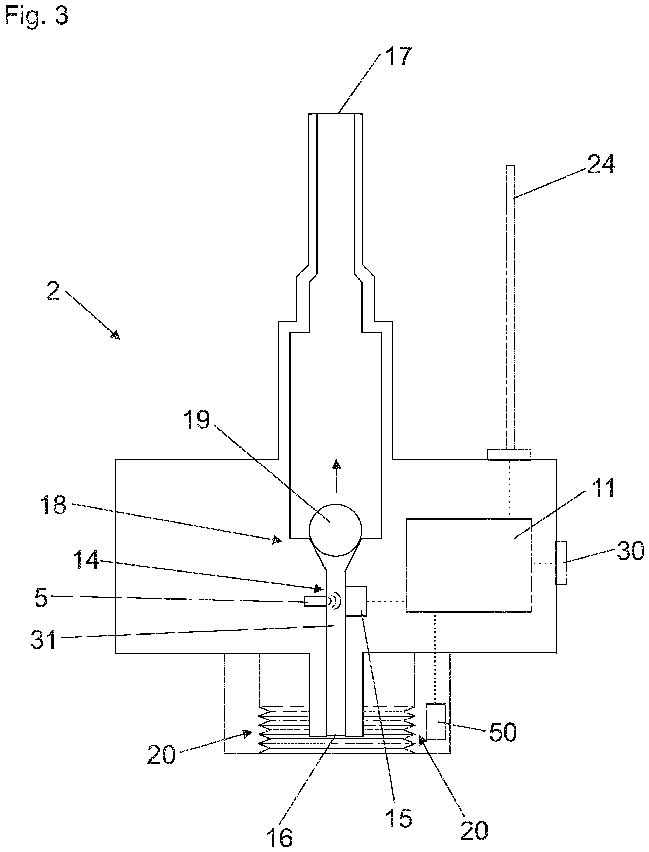

Die Fig. 3 zeigt ein Ausführungsbeispiel einer Andockeinheit 2 in einer schematischen Schnittdarstellung.

An der Oberseite der Andockeinheit 2 ist ein Andockeinheitsauslass 17 vorgesehen, welcher zum Anschluss eines Schlauchs als Flüssigkeitsleitung 10 geeignet ist.

Aus der Schnittdarstellung ist auch der Andockeinheitseinlass 16 ersichtlich, über welchen Flüssigkeit 9 in die Andockeinheit 2 gelangen kann. Der Andockeinheitseinlass 16 ist an einem Fortsatz an der Unterseite der Andockeinheit 2 ausgebildet, sodass der Andockeinheitseinlass 16 in einen Einsatz 22 und/oder einen Behälter 3 eingeführt werden kann.

An den Andockeinheitseinlass 16 schließt ein Flüssigkeitskanal 31 an, welcher den Andockeinheitseinlass 16 mit dem Andockeinheitsauslass 17 verbindet. Im Flüssigkeitskanal 31 ist ein Rückschlagventil 18 angeordnet. Das Rückschlagventil 18 weist eine dichtende Kugel 19 auf. Die Kugel 19 kann mittels einer Feder (nicht dargestellt) oder durch die Schwerkraft dichtend an einen sich verjüngenden Teil des Flüssigkeitskanals 31 anliegen. Wird mittels des Fördergeräts 1, insbesondere einer Pumpe, ein Unterdruck angelegt, hebt sich die Kugel 19 und Flüssigkeit kann durch den Flüssigkeitskanal 31 fließen. Alternativ kann das Rückschlagventil 18 mechanisch beim Andocken aufgedrückt werden.

Der Detektor 15 kann zwischen Flüssigkeit 9 und Luft 7 im Detektionsbereich 14, hier im Flüssigkeitskanal 31, unterscheiden.

So kann ein Leerstand im Behälter 3 detektiert werden. Insbesondere kann der Detektor 15 einen Wechsel von Flüssigkeit 9 auf Luft 7 detektieren. Die Luft 7 gelangt in den Detektionsbereich 14, wenn der Behälter 3 fast leer ist.

Der Detektor 15 kann zudem detektieren, wenn ein Leervolumen "endet", also ein Wechsel von Luft 7 auf Flüssigkeit 9 im Detektionsbereich 14 stattfindet.

In dieser Ausführungsform der Andockeinheit 2 ist der Detektor 15 als optischer Sensor ausgebildet. Insbesondere wird ein transluzenter Abschnitt des Flüssigkeitskanals 31 von einer Seite mittels einer Lichtquelle 5 von Licht durchschienen. Auf der gegenüberliegenden Seite des Flüssigkeitskanals 31 ist der Detektor 15 angebracht, welcher das Licht detektieren kann. Durch die Luft 7 in der Flüssigkeit 9 ändert das Brechungsverhalten des Lichts, sodass zwischen Luft 7 und Flüssigkeit 9 unterschieden werden kann. Die Unterscheidung erfolgt vorzugweise nicht zwischen reiner Flüssigkeit und reiner Luft, sondern auf Basis eines Schwellwerts. Insbesondere kann eine Vielzahl von Luftbläschen im Förderweg als Luft 7 gelten.

In der Andockeinheit 2 ist zudem eine Logikeinheit 11 schematisch eingezeichnet. Diese steht in Datenverbindung mit dem Detektor 15.

Die Logikeinheit 11 kann weiterhin in Datenverbindung mit einem Lesegerät 50 zum kontaktlosen Lesen von Daten aus einem im Behälter 3 oder im Einsatz 22 befindlichen Datenträger 48, insbesondere RFID-Tag, stehen.

Das Lesegerät 50 kann als Schreibgerät ausgebildet sein, womit Daten, insbesondere ein geupdatetes Volumen oder ein Füllstand des Behälters 3, auf den Datenträger 48 schreibbar ist.

Die Daten können an eine Antenne 24 zum drahtlosen Übertragen von Daten und/oder einen Datenanschluss 30 zum Anschluss eines Kabels zum kabelgebundenen Übertragen von Daten weitergeleitet werden. Über die genannten Schnittstellen kann die Andockeinheit 2 mit anderen Einheiten kommunizieren. Insbesondere kann die Andockeinheit 2 so mit einer Steuereinheit 4 verbunden werden.

Zum lösbaren Befestigen der Andockeinheit 2 an einem Behälter 3 und/oder einem Einsatz 22 ist ein Gegengewinde 20 an der Unterseite der Andockeinheit 2 vorgesehen. Beispielsweise kann das Gegengewinde 20 zum Eingriff in ein Behälterverschlussgewinde 21 ausgebildet sein.

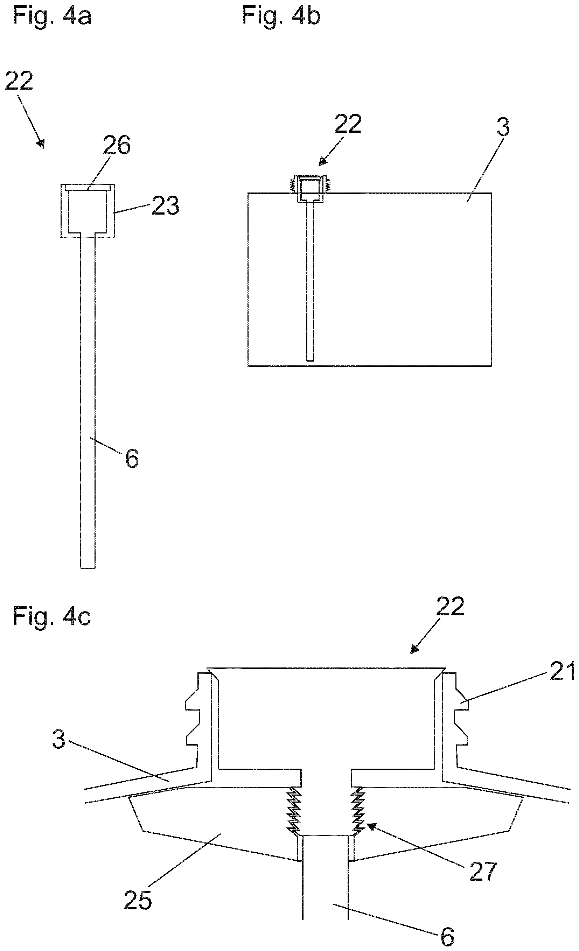

Die Fig. 4a zeigt einen Einsatz 22 in einer schematischen Schnittdarstellung. Die Fig. 4b zeigt einem in einen Behälter 3 lösbar befestigten Einsatz 22.

Der Einsatz 22 weist ein Saugrohr 6 und einen Befestigungsteil 23 auf. Mit dem Befestigungsteil 23 kann der Einsatz 22 in einer Behälteröffnung, vorzugsweise durch Einpressen, lösbar befestigt werden. Dadurch, dass der Einsatz 22 lösbar im Behälter 3 befestigt ist, kann der Behälter 3 nach der Verwendung vom Einsatz 22 getrennt recycelt oder wiederverwendet werden.

Am Befestigungsteil 23 ist zudem eine Dichtung 26 angeordnet, welche den Einsatz 22 gegenüber einer eingesetzten Andockeinheit 2 abdichten kann.

Mittels des Saugrohrs 6, welches bevorzugt aus einem weicheren Material als das Befestigungsteil 23 gefertigt ist, kann Flüssigkeit 9 aus dem Behälter 3 gesaugt werden.

Das Ende des Saugrohrs 6 bildet typischerweise den Einlass 28 in den Förderweg 47 der Dosiervorrichtung 32.

In der Fig. 4b ist ersichtlich, dass der Einsatz 22 in die Behälteröffnung eingebracht wird und dort vorzugsweise eingepresst wird.

Am Einsatz 22 kann ein Datenträger 48, insbesondere ein RFID-Tag, angeordnet sein, welcher mittels eines an der Andockeinheit 2 angeordneten Lesegeräts 50 ausgelesen werden kann. Das Lesegerät 50 kann als Schreibgerät zum Schreiben von Daten auf den Datenträger 48 ausgebildet sein. Der Datenträger 48 kann auch direkt am Behälter 3 angeordnet sein.

Die Fig. 4c zeigt ein alternatives Ausführungsbeispiel eines Einsatzes 22. In diesem Ausführungsbeispiel ist der Einsatz 22 mit einem Rasthaken 25 verbindbar. Der Rasthaken 25 ist ein zusätzliches Bauteil, welches an der Innenseite des Behälters 3 anlegbar ist. Insbesondere kann der Rasthaken 25 so ausgebildet sein, dass er längs durch die Behälteröffnung in den Behälter 3 einbringbar ist und quer die Behälteröffnung überbrücken kann. So kann sich der Rasthaken 25 gegen die Innenseite des Behälters 3 stemmen und den Einsatz 22 in der Öffnung des Behälters 3 halten.

Die Verbindung zwischen dem Einsatz 22 und dem Rasthaken 25 erfolgt vorzugsweise mittels Verrasten mit einer Rastvorrichtung 27, es sind aber auch andere Verbindungen möglich. Eine Rastvorrichtung 27 kann mehrere Rastzähne aufweisen.

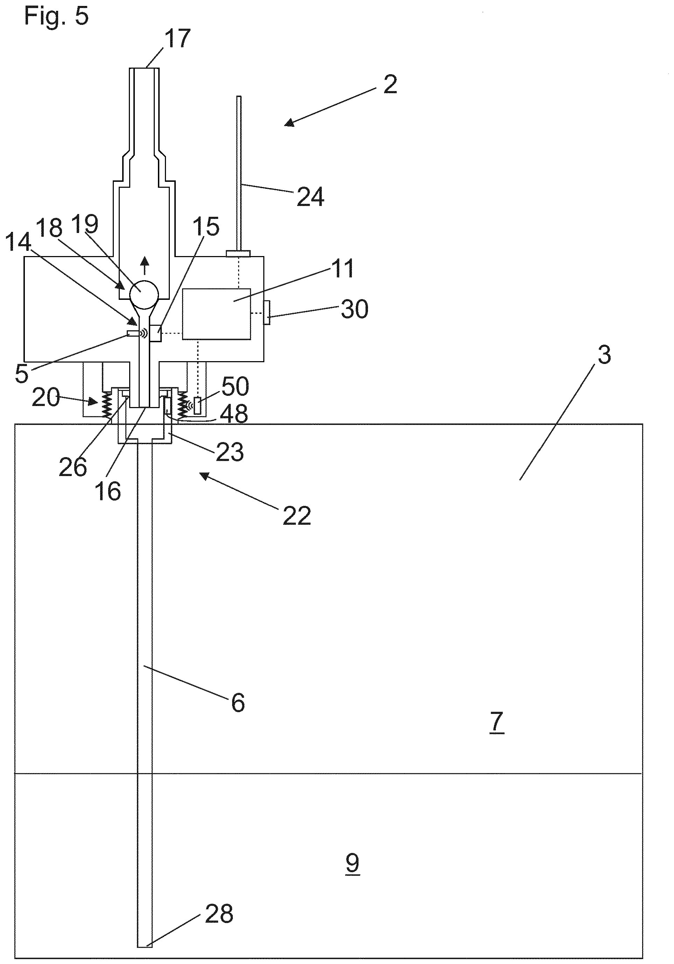

Die Fig. 5 zeigt einen Behälter 3 mit einem Einsatz 22, welcher in der Behälteröffnung befestigt ist, und einer Andockeinheit 2, welche im Einsatz 22 und am Behälter 3 lösbar befestigt ist.

Die Andockeinheit 2 kann mittels eines an der Andockeinheit 2 angeordneten Gegengewindes 20 am Behälterverschlussgewinde 21 des Behälters 3 durch Drehung oder durch Verhaken lösbar befestigt werden.

Der Andockeinheitseinlass 16 wird dadurch in kommunikative Verbindung mit dem Inneren des Einsatzes 22 und dem Saugrohr 6 gebracht, sodass Flüssigkeit 9 aus dem Behälter 3 in die Andockeinheit 2 gesaugt werden kann. Eine Dichtung 26, welche als Dichtlippe ausgeformt sein kann, dichtet die Andockeinheit 2 gegenüber dem Einsatz 22 ab, insbesondere wird der Fortsatz der Andockeinheit 2, an welchem der Andockeinheitseinlass 16 angeordnet ist, gegenüber dem Einsatz 22 abgedichtet.

Im befestigten Zustand der Andockeinheit 2 am Behälter 3 kann mittels des Lesegeräts 50 der Andockeinheit 2 der Datenträger 48 am Behälter 3 ausgelesen und/oder beschrieben werden, vorzugsweise kontaktlos.

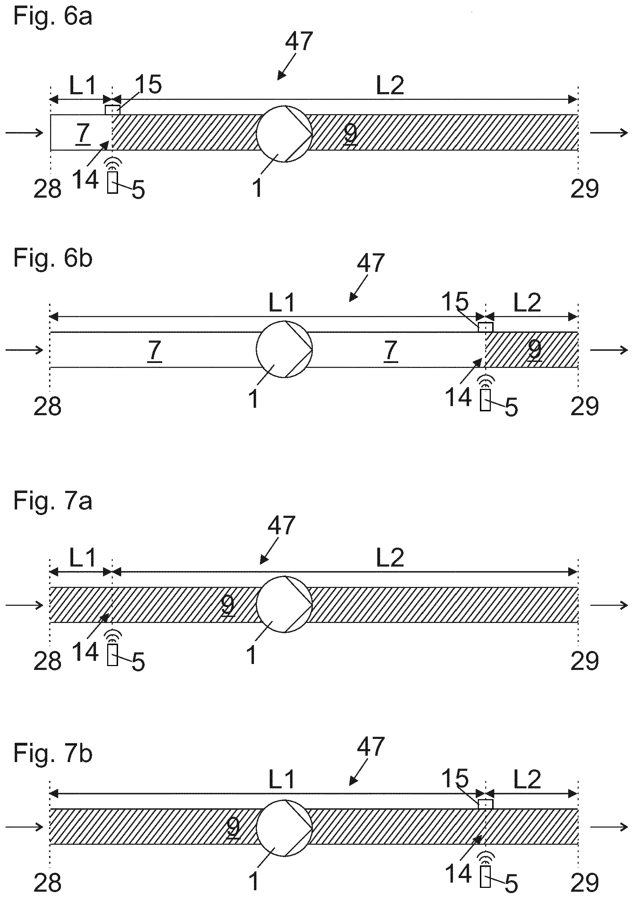

Die Figuren 6a und 6b zeigen den Förderweg 47 zwischen einem Einlass 28 und einem Auslass 29 in einer schematischen Darstellung.

Im Förderweg 47 ist ein Fördergerät 1 in Form einer Pumpe angeordnet. Anstatt einer Pumpe ist aber auch ein öffenbares Ventil oder ein sonstiges Fördergerät denkbar.

Im Förderweg 47 ist ein Detektor 15 mit einem Detektionsbereich 14 angeordnet. Der Detektor 15 ist hier als optischer Detektor ausgeformt, der dazu ausgebildet ist, Licht von der Lichtquelle 5 zu empfangen. Das Licht durchscheint den Förderweg 47 und damit das im Förderweg 47 befindliche Medium. Der Detektor 15 kann durch sich unterscheidende optische Eigenschaften von Flüssigkeit 9 und Luft 7 zwischen Flüssigkeit 9 auf der einen Seite und Luft 7 auf der anderen Seite unterscheiden. Die Unterscheidung erfolgt vorzugweise nicht zwischen reiner Flüssigkeit und reiner Luft, sondern auf Basis eines Schwellwerts. Insbesondere kann eine Vielzahl von Luftbläschen im Förderweg als Luft 7 gelten

Der Detektor 15 muss nicht als optischer Detektor ausgebildet sein. Möglich sind beispielsweise Vorrichtungen mit einem Schwimmer, wobei der Schwimmer je nachdem ob sich Flüssigkeit 9 oder Luft 7 im Detektionsbereich 14 befindet unterschiedlich stark aufschwimmt, wobei die Aufschwimmposition des Schwimmers von einem, vorzugweise kontaktlosen, Schalter detektiert werden kann. Auch andere Vorrichtungen, welche zur Unterscheidung von Flüssigkeit 9 und Luft 7 geeignet sind, sind denkbar.

In den Figuren 6a und 6b ist die Situation nach der Detektion eines Wechsels von Flüssigkeit 9 auf Luft 7 im Detektionsbereich 14 gezeigt. Typischerweise wird die Förderung durch das Fördergerät 1 nach einer solchen Detektion gestoppt. Gegebenenfalls kann eine Leerstandmeldung an den Bediener ausgegeben werden. Danach wird typischerweise der Behälter 3, in welchem sich der Einlass 28 befinden kann, durch einen vollen Behälter 3 ersetzt oder neu aufgefüllt.

In dieser Situation befindet sich im Förderweg 47 ein Leervolumen zwischen dem Einlass 28 und dem Detektionsbereich 14.

Bei einer Förderung von Flüssigkeit 9 aus dem neuen oder wiederaufgefüllten Behälter 3 muss das Leervolumen aus dem Förderweg 47 gefördert werden. Dafür muss das Fördergerät 1 länger betrieben werden.

Durch das Leervolumen wird die Kalibrierung verfälscht. Die Leistung des Fördergeräts 1 wird durch die zusätzliche Förderung des Leervolumens unterschätzt. Bei folgenden Dosierungen mit der daraus gewonnen Kalibrierung sind daher Überdosierungen zu erwarten.

In der Fig. 6a ist der Detektionsbereich 14 in der Nähe des Einlasses 28 angeordnet, womit das Leervolumen relativ klein ist. Insbesondere ist L1 kleiner oder viel kleiner als L2. Das oben genannte Problem kann also verkleinert werden, indem der Detektor 15 möglichst nahe am Einlass 28 angeordnet wird.

In der Fig. 6b ist der Detektionsbereich 14 in der Nähe des Auslasses 29 angeordnet, womit das Leervolumen relativ groß ist, insbesondere ist L2 kleiner oder viel kleiner als L1. In manchen Situationen kann das unvermeidbar sein. Vorteilhaft ist, dass sich nach einer Leerstandmeldung nur wenig Flüssigkeit 9 im Förderweg 47 befindet, womit der Förderweg 47 nicht unnötig durch möglicherweise ätzende Eigenschaften der Flüssigkeit angegriffen wird.

Die Figuren 7a und 7b zeigen die Situation nach dem einem üblichen Dosiervorgang, wenn kein Leerstand detektiert wird. Der gesamte Förderweg 47 ist mit Flüssigkeit 9 gefüllt.

In Situationen, in denen sogar das kleine Leervolumen der Fig. 6a zu ungenauen Ergebnissen führt oder in denen der Detektor 15 aus anderen Gründen nicht Nahe am Einlass 28 angeordnet wird oder werden kann, kann das Kalibrierverfahren der zweiten Variante angewendet werden, wodurch die Anordnung des Detektors 15 egal ist und das Leervolumen kompensiert wird.

Die Figuren 8, 9a und 9b zeigen die Achse eines Zählparameters 40 des Fördergeräts 1, beispielsweise eine Zeitachse oder die Achse eines Zählers der Anzahl der Pumpzyklen des Fördergeräts 1.

In einer ersten Variante des Kalibrierverfahrens, wie in Fig. 8 dargestellt, wird das Fördern von Flüssigkeit 9 und/oder Luft 7 durch Ansprechen des mindestens einen Fördergeräts 1 zu einem Startzählpunkt 33 gestartet. In einem zweiten Schritt wird ein Wechsel von Flüssigkeit 9 auf Luft 7 im Detektionsbereich 14 des Detektors 15 zu einem Luftdetektionszählpunkt 39 detektiert. Das Intervall zwischen dem Startzählpunkt 33 und dem Luftdetektionszählpunkt 39 wird als Kalibrierzählspanne 42 zum Kalibrieren des mindestens einen Fördergeräts 1 verwendet.

Der Detektionsbereich 14 ist in einer Andockeinheit oder einer Sauglanze nahe am Behälter angeordnet, insbesondere in dem mindestens einen Einlass 28 angrenzenden Viertel, bevorzugt Achtel und besonders bevorzugt Zehntel, des Förderwegs 47 angeordnet, wie beispielsweise in Fig. 6a dargestellt. Das Leervolumen ist damit so klein, dass die Leerförderzählspanne 37 viel kleiner als die Kalibrierzählspanne 42 ist, womit die Kalibrierung genau genug ist. Der Flüssigkeitsdetektionszählpunkt 34 muss in dieser Variante nicht bestimmt werden und ist in Fig. 8 nur zum Vergleich dargestellt.

Zwischen dem Startzählpunkt 34 und dem Luftdetektionszählpunkt 39 wird das Initialvolumen 13, welches der Steuereinheit 4 vom Datenträger 48 des Behälters 3 bekannt ist, und ein Leervolumen gefördert, wobei das Leervolumen weniger als 5 Prozent, bevorzugt weniger als 2 Prozent und besonders bevorzugt weniger als 1 Prozent des Initialvolumens 13 groß sein kann.

In den Ausführungsbeispielen der Figuren 9a und 9b (zweite Variante) wird das Fördern von Flüssigkeit 9 und/oder Luft 7 durch Ansprechen des mindestens einen Fördergeräts 1 zu einem Startzählpunkt 33 gestartet. Zudem wird Flüssigkeit 9 im Detektionsbereich 14 des Detektors 15 zu einem Flüssigkeitsdetektionszählpunkt 34 detektiert. Zum Flüssigkeitszählpunkt 34 wurde ein Volumen an Flüssigkeit 9 und/oder Luft 7 gefördert, welches dem Leervolumen entspricht.

Nach der Detektion von Flüssigkeit 9 zum Flüssigkeitsdetektionszählpunkt 34 wird weitergefördert. Danach wird ein Wechsel von Flüssigkeit 9 auf Luft 7 im Detektionsbereich 14 des Detektors 15 zu einem Luftdetektionszählpunkt 39 detektiert. Vorzugsweise wird daraufhin das Fördern von Flüssigkeit 9 und/oder Luft 7 durch Ansprechen des mindestens einen Fördergeräts 1 gestoppt. Ein Leervolumen befindet sich wieder im Förderweg 47 zwischen Einlass 28 und Detektor 15, wie in Fig. 6a und 6b.

Das Intervall zwischen dem Flüssigkeitsdetektionszählpunkt 34 und dem Luftdetektionszählpunkt 39 wird als Kalibrierzählspanne 42 zum Kalibrieren des mindestens einen Fördergeräts 1 verwendet. Zwischen dem Flüssigkeitsdetektionszählpunkt 34 und dem Luftdetektionszählpunkt 39 wurde das Initialvolumen 13 gefördert, sodass die Kalibrierung mithilfe des vom Datenträger 48 bekannten Initialvolumens 13 durchgeführt werden kann. Das Leervolumen trägt so nicht zu Kalibrierzählspanne bei. Das Leervolumen kann daher im Prinzip beliebig groß sein, wie in Fig. 6b.

Die Fig. 9b zeigt für das zweite Ausführungsbeispiel des Kalibrierverfahrens (Fig. 9a), dass ein Kalibriervorgang zu einem Zählpunkt 41 unterbrochen werden kann. Beispielsweise kann das Fördern für den Kalibriervorgang zu Zeiten und für Zeiten erfolgen, da die Dosiervorrichtung 32 ohnehin einen Dosiervorgang durchführt. Das gilt auch für das Ausführungsbeispiel in Fig. 8.

### Bezugszeichenliste

- 1: Fördergerät
- 2: Andockeinheit
- 3: Behälter
- 4: Steuereinheit
- 5: Leuchtmittel
- 6: Saugrohr
- 7: Luft
- 9: Flüssigkeit
- 10: Flüssigkeitsleitung
- 11: Logikeinheit
- 12: Datenleitung
- 13: Initialvolumen
- 14: Detektionsbereich
- 15: Detektor
- 16: Andockeinheitseinlass
- 17: Andockeinheitsauslass
- 18: Rückschlagventil
- 19: Kugel
- 20: Gegengewinde
- 21: Behälterverschlussgewinde
- 22: Einsatz
- 23: Befestigungsteil
- 24: Antenne
- 25: Rasthaken
- 26: Dichtung
- 27: Rastvorrichtung
- 28: Einlass
- 29: Auslass
- 30: Datenanschluss
- 31: Flüssigkeitskanal
- 32: Dosiervorrichtung
- 33: Startzählpunkt
- 34: Flüssigkeitsdetektionszählpunkt
- 37: Leerförderzählspanne
- 39: Luftdetektionszählpunkt
- 40: Zählparameter
- 41: Zählpunkt des Stopps der Förderung
- 42: Kalibrierzählspanne
- 45: Zielgerät
- 46: Einspülverteiler
- 47: Förderweg
- 48: Datenträger
- 49: Ventil
- 50: Lesegerät

## Patentansprüche

1. Verfahren zum Kalibrieren mindestens eines Fördergeräts (1) zum Fördern von Flüssigkeit (9) und/oder Luft (7) einer Dosiervorrichtung (32) zum Dosieren einer Flüssigkeit (9) von mindestens einem Behälter (3) zu mindestens einem Auslass (29), insbesondere zu mindestens einem Einspülverteiler (46) und/oder mindestens einem Zielgerät(45), mittels des mindestens einen Fördergeräts (1), wobei ein Detektionsbereich (14) mindestens eines Detektors (15) zur Unterscheidung zwischen Flüssigkeit (9) und Luft (7) zwischen dem mindestens einen Behälter (3) und dem mindestens einen Auslass (29) angeordnet ist, wobei im oder am mindestens einen Behälter (3) mindestens ein Datenträger (48) angeordnet ist, auf welchem das Initialvolumen (13) an Flüssigkeit (9) im Behälter (3) gespeichert ist, mit den folgenden Verfahrensschritten:
- Auslesen des Initialvolumens (13) vom mindestens einen Datenträger (48) und Übertragung an die Dosiervorrichtung (32),
- Start des Förderns von Flüssigkeit (9) und/oder Luft (7) durch Ansprechen des mindestens einen Fördergeräts (1) zu einem Startzählpunkt (33),
- Detektion eines Wechsels von Flüssigkeit (9) auf Luft (7) im Detektionsbereich (14) durch den mindestens einen Detektor (15) zu einem Luftdetektionszählpunkt (39),
- Verwendung des Initialvolumens (13) als Referenzvolumen und Verwendung einer Kalibrierzählspanne (42) auf Basis zumindest des Luftdetektionszählpunkts (39) zum Kalibrieren des mindestens einen Fördergeräts (1).

2. Verfahren nach dem vorhergehenden Anspruch, wobei eine Kalibrierzählspanne (42) zwischen dem Startzählpunkt (33) und dem Luftdetektionszählpunkt (39) zum Kalibrieren des mindestens einen Fördergeräts (1) verwendet wird.

3. Verfahren nach einem der vorhergehenden Ansprüche, wobei der mindestens eine Datenträger (48) mittels eines Lesegeräts (50) der Dosiervorrichtung (32), insbesondere kontaktlos, ausgelesen wird, vorzugsweise wobei das Lesegerät (50) als RFID-Lesegerät oder optischer Scanner ausgebildet ist.

4. Verfahren nach einem der vorhergehenden Ansprüche, wobei der mindestens eine Datenträger (48) mittels mindestens eines Schreibgeräts der Dosiervorrichtung (32), insbesondere kontaktlos, beschrieben wird, vorzugsweise wobei das Restvolumen an Flüssigkeit (9) im Behälter (3) auf den mindestens einen Datenträger (48) geschrieben wird und/oder wobei das Lesegerät (50) als Lese-Schreib-Gerät ausgebildet sein kann.

5. Verfahren nach einem der vorhergehenden Ansprüche, wobei das mindestens eine Fördergerät (1) von mindestens einer Steuereinheit (4) gesteuert wird, vorzugsweise wobei die mindestens eine Steuereinheit (4) als Zentralsteuereinheit, welche mindestens ein Fördergerät (1) und/oder mindestens ein Zielgerät (45) und/oder mindestens ein Ventil (49) steuert, ausgebildet ist.

6. Verfahren nach dem vorhergehenden Anspruch, wobei der mindestens eine Detektor (15) ein Signal an die Steuereinheit (4) sendet, wenn ein Wechsel von Flüssigkeit (9) auf Luft (7), oder umgekehrt, detektiert wird.

7. Verfahren nach einem der vorhergehenden Ansprüche, wobei die Detektion eines Wechsels von Flüssigkeit (9) auf Luft (7) oder von Luft (7) auf Flüssigkeit (9) erfolgt, wenn ein Mittelwert eines Detektorsignals, insbesondere einer Lichtintensität bei einem optischen Detektor, über einen bestimmten Detektionszeitraum einen bestimmten Schwellwert über- oder unterschreitet.

8. Verfahren nach einem der vorhergehenden Ansprüche, wobei die Detektion eines Wechsels von Flüssigkeit (9) auf Luft (7) erst berücksichtigt wird, wenn
- eine bestimmte Anlaufzeit, insbesondere gezählt ab dem Startzählpunkt (33), abgelaufen ist, und/oder
- das Restvolumen an Flüssigkeit (9) im mindestens einen Behälter (3) ein bestimmtes Grenzvolumen, beispielsweise 20 Prozent, insbesondere 10 Prozent, des Initialvolumens (13), unterschreitet.

9. Verfahren nach einem der vorhergehenden Ansprüche, wobei das Restvolumen an Flüssigkeit (9) im mindestens einen Behälter (3) in der mindestens einen Dosiervorrichtung (32), insbesondere in der Steuereinheit (4), und/oder in einem Datenträger (48) des mindestens einen Behälters (3) gespeichert und nach einem Fördern aktualisiert wird, und/oder wobei das Restvolumen an Flüssigkeit (9) im mindestens einen Behälter (3) mittels eines Sensors gemessen wird.

10. Dosiervorrichtung (32) ausgeführt zum Dosieren einer Flüssigkeit (9) von mindestens einem Behälter (3) zu mindestens einem Auslass (29), wobei ein Detektionsbereich (14) mindestens eines Detektors (15) zur Unterscheidung zwischen Flüssigkeit (9) und Luft (7) zwischen dem mindestens einen Behälter (3) und dem mindestens einen Auslass (29) angeordnet ist, die Dosiervorrichtung (32) aufweisend ein Fördergerät (1) zum Fördern von Flüssigkeit (9) und/oder Luft (7) sowie Mittel, welche dazu ausgeführt sind, das Verfahren nach einem der vorhergehenden Ansprüche auszuführen.

11. Dosiervorrichtung (32) nach dem vorhergehenden Anspruch, wobei in oder an dem mindestens einen Behälter (3) mindestens ein Datenträger (48) angeordnet ist, auf welchem das Initialvolumen (13) an Flüssigkeit (9) im Behälter (3) gespeichert ist.

12. Dosiervorrichtung (32) nach Anspruch 10 oder 11, wobei mindestens ein Einlass (28) eines Förderwegs (47) vorgesehen ist, vorzugsweise wobei
- der mindestens eine Einlass (28) im oder am mindestens einen Behälter (3) angeordnet ist, und/oder
- der Detektionsbereich (14) in dem mindestens einen Einlass (28) angrenzenden Viertel, bevorzugt Achtel und besonders bevorzugt Zehntel, des Förderwegs (47).

13. Dosiervorrichtung (32) nach einem der Ansprüche 10 bis 12, wobei
- der mindestens eine Behälter (4) mittels einer Andockeinheit (2) an die Dosiervorrichtung (32) ankoppelbar ist, und/oder
- im mindestens einen Behälter (3) ein Einsatz (22) angeordnet ist, besonders bevorzugt wobei der mindestens eine Datenträger (48) am Einsatz (22) angeordnet ist.

14. Dosiervorrichtung (32) nach einem der Ansprüche 10 bis 13, wobei die Dosiervorrichtung (32) mindestens ein Lesegerät (50) zum, insbesondere berührungslosen, Lesen des mindestens einen Datenträgers (48) aufweist, besonders bevorzugt wobei das mindestens eine Lesegerät (50) zudem als Schreibgerät ausgeformt ist.

15. Dosiervorrichtung (32) nach einem der Ansprüche 10 bis 14, wobei mindestens zwei Behälter (3) und mindestens zwei Fördergeräte (1) vorgesehen sind und jeweils ein Fördergerät (1) pro Behälter (3) vorgesehen ist, vorzugsweise wobei die Flüssigkeit (9) mittels des Fördergeräts (1) in einen Einspülverteiler (46) förderbar ist, besonders bevorzugt wobei die Flüssigkeit (9) vom Einspülverteiler (46) über ein Spülmedium, insbesondere Wasser, weiter zum mindestens einen Zielgerät (49) förderbar ist.

## Claims

1. A method for calibrating at least one conveyor device (1) for conveying liquid (9) and/or air (7) of a metering device (32) for metering a liquid (9) from at least one container (3) to at least one outlet (29), in particular to at least one rinsing-in distributor (46) and/or at least one target device (45), by means of the at least one conveyor device (1), wherein a detection region (14) of at least one detector (15) for distinguishing between liquid (9) and air (7) is arranged between the at least one container (3) and the at least one outlet (29), wherein at least one data carrier (48) is arranged in or on the at least one container (3), on which data carrier the initial volume (13) of liquid (9) in the container (3) is stored, with the following method steps:
- reading the initial volume (13) from the at least one data carrier (48) and transmitting it to the metering device (32),
- starting the conveying of liquid (9) and/or air (7) by activating of the at least one conveyor device (1) at a start counting point (33),
- detecting a change from liquid (9) to air (7) in the detection region (14) by the at least one detector (15) at an air detection counting point (39),
- using the initial volume (13) as a reference volume and using a calibration counting range (42) based on at least the air detection counting point (39) for calibrating the at least one conveyor device (1).

2. The method according to the preceding claim, wherein a calibration counting range (42) between the start counting point (33) and the air detection counting point (39) is used to calibrate the at least one conveyor device (1).

3. The method according to one of the preceding claims, wherein the at least one data carrier (48) is read by means of a reading device (50) of the metering device (32), in particular contactlessly, preferably wherein the reading device (50) is designed as an RFID reading device or optical scanner.

4. The method according to one of the preceding claims, wherein the at least one data carrier (48) is written onto by means of at least one writing device of the metering device (32), in particular contactlessly, preferably wherein the residual volume of liquid (9) in the container (3) is written onto the at least one data carrier (48) and/or wherein the reading device (50) can be designed as a read-write device.

5. The method according to one of the preceding claims, wherein the at least one conveyor device (1) is controlled by at least one control unit (4), preferably wherein the at least one control unit (4) is designed as a central control unit which controls at least one conveyor device (1) and/or at least one target device (45) and/or at least one valve (49).

6. The method according to the preceding claim, wherein the at least one detector (15) sends a signal to the control unit (4) when a change from liquid (9) to air (7), or vice versa, is detected.

7. The method according to one of the preceding claims, wherein the detection of a change from liquid (9) to air (7) or from air (7) to liquid (9) takes place when an average value of a detector signal, in particular a light intensity in an optical detector, exceeds or falls below a certain threshold value over a certain detection period.

8. The method according to one of the preceding claims, wherein the detection of a change from liquid (9) to air (7) is only taken into account when
- a certain start-up time, in particular counted from the start counting point (33), has elapsed, and/or
- the residual volume of liquid (9) in the at least one container (3) falls below a certain limit volume, for example 20 percent, in particular 10 percent, of the initial volume (13).

9. The method according to one of the preceding claims, wherein the residual volume of liquid (9) in the at least one container (3) is stored in the at least one metering device (32), in particular in the control unit (4), and/or in a data carrier (48) of the at least one container (3) and is updated after a conveying, and/or wherein the residual volume of liquid (9) in the at least one container (3) is measured by means of a sensor.

10. A metering device (32) designed for metering a liquid (9) from at least one container (3) to at least one outlet (29), wherein a detection region (14) of at least one detector (15) for distinguishing between liquid (9) and air (7) is arranged between the at least one container (3) and the at least one outlet (29), the metering device (32) comprising a conveyor device (1) for conveying liquid (9) and/or air (7) and means which are designed to carry out the method according to one of the preceding claims.

11. The metering device (32) according to the preceding claim, wherein at least one data carrier (48) is arranged in or on the at least one container (3), on which data carrier the initial volume (13) of liquid (9) in the container (3) is stored.

12. The metering device (32) according to claim 10 or 11, wherein at least one inlet (28) of a conveying path (47) is provided, preferably wherein
- the at least one inlet (28) is arranged in or on the at least one container (3), and/or
- the detection region (14) is in the fourth, preferably eighth and particularly preferably tenth part of the conveying path (47) adjacent to the at least one inlet (28).

13. The metering device (32) according to one of claims 10 to 12, wherein
- the at least one container (4) can be coupled to the metering device (32) by means of a docking unit (2), and/or
- an insert (22) is arranged in the at least one container (3), particularly preferably wherein the at least one data carrier (48) is arranged on the insert (22).

14. The metering device (32) according to one of claims 10 to 13, wherein the metering device (32) has at least one reading device (50) for reading, in particular contactlessly, the at least one data carrier (48), particularly preferably wherein the at least one reading device (50) is also designed as a writing device.

15. The metering device (32) according to one of claims 10 to 14, wherein at least two containers (3) and at least two conveyor devices (1) are provided and one respective conveyor device (1) is provided for each container (3), preferably wherein the liquid (9) can be conveyed by means of the conveyor device (1) into a rinsing-in distributor (46), particularly preferably wherein the liquid (9) can be further conveyed from the rinsing-in distributor (46) via a rinsing medium, in particular water, to the at least one target device (49).

## Revendications

1. Procédé d'étalonnage d'au moins un appareil de convoyage (1) destiné à convoyer du liquide (9) et/ou de l'air (7) d'un dispositif de dosage (32) destiné à doser un liquide (9) d'au moins un contenant (3) vers au moins une sortie (29), en particulier vers au moins un distributeur de rinçage (46) et/ou au moins un appareil cible (45), au moyen de l'au moins un appareil de convoyage (1), dans lequel une zone de détection (14) d'au moins un détecteur (15) est disposée entre l'au moins un contenant (3) et l'au moins une sortie (29) pour distinguer entre du liquide (9) et de l'air (7), dans lequel est disposé dans ou sur l'au moins un contenant (3) au moins un support de données (48), sur lequel le volume initial (13) en liquide (9) est stocké dans le contenant (3), avec les étapes de procédé suivantes :
- la lecture du volume initial (13) de l'au moins un support de données (48) et la transmission au dispositif de dosage (32),
- le lancement du convoyage de liquide (9) et/ou de l'air (7) en réponse à l'au moins un appareil de convoyage (1) à un point de comptage de lancement (33),
- la détection d'un passage du liquide (9) sur de l'air (7) dans la zone de détection (14) par l'au moins un détecteur (15) à un point de comptage de détection d'air (39),
- l'utilisation du volume initial (13) en tant que volume de référence et l'utilisation d'un laps de comptage d'étalonnage (42) sur la base au moins du point de comptage de détection d'air (39) pour étalonner l'au moins un appareil de convoyage (1).

2. Procédé selon la revendication précédente, dans lequel un laps de comptage d'étalonnage (42) entre le point de comptage de lancement (33) et le point de comptage de détection d'air (39) est utilisé pour étalonner l'au moins un appareil de convoyage (1).

3. Procédé selon l'une quelconque des revendications précédentes, dans lequel l'au moins un support de données (48) est lu, en particulier sans contact, au moyen d'un appareil de lecture (50) du dispositif de dosage (32), de préférence dans lequel l'appareil de lecture (50) est réalisé en tant qu'appareil de lecture RFID ou en tant que scanner optique.

4. Procédé selon l'une quelconque des revendications précédentes, dans lequel l'au moins un support de données (48) est décrit, en particulier sans contact, au moyen d'au moins un appareil d'écriture du dispositif de dosage (32), de préférence dans lequel le volume résiduel en liquide (9) dans le contenant (3) est écrit sur l'au moins un support de données (48) et/ou dans lequel l'appareil de lecture (50) peut être réalisé en tant qu'appareil de lecture-d'écriture.

5. Procédé selon l'une quelconque des revendications précédentes, dans lequel l'au moins un appareil de convoyage (1) est commandé par au moins une unité de commande (4), dans lequel de préférence l'au moins une unité de commande (4) est réalisée en tant qu'unité de commande centrale, laquelle commande au moins un appareil de convoyage (1) et/ou au moins un appareil cible (45) et/ou au moins une soupape (49).

6. Procédé selon la revendication précédente, dans lequel l'au moins un détecteur (15) envoie un signal à l'unité de commande (4) lorsqu'un passage du liquide (9) sur de l'air (7), ou inversement, est détecté.

7. Procédé selon l'une quelconque des revendications précédentes, dans lequel la détection d'un changement du liquide (9) sur de l'air (7) ou de l'air (7) sur du liquide (9) est effectuée lorsqu'une valeur moyenne d'un signal de détecteur, en particulier d'une intensité de lumière pour un détecteur optique, dépasse ou ne dépasse pas une valeur de seuil définie sur une période de temps de détection définie.

8. Procédé selon l'une quelconque des revendications précédentes, dans lequel la détection d'un changement du liquide (9) sur de l'air (7) est prise en compte seulement lorsque
- une période de démarrage définie, en particulier comptée à partir du point de comptage de lancement (33), s'est écoulée, et/ou
- le volume restant de liquide (9) dans l'au moins un contenant (3) ne dépasse pas une volume limite défini, par exemple 20 %, en particulier 10 %, du volume initial (13).

9. Procédé selon l'une quelconque des revendications précédentes, dans lequel le volume restant en liquide (9) est stocké dans l'au moins un contenant (3) dans l'au moins un dispositif de dosage (32), en particulier dans l'unité de commande (4) et/ou dans un support de données (48) de l'au moins un contenant (3) et est mis à jour après un convoyage, et/ou dans lequel le volume restant en liquide (9) dans l'au moins un contenant (3) est mesuré au moyen d'un capteur.

10. Dispositif de dosage (32) exécuté pour doser un liquide (9) de l'au moins un contenant (3) vers au moins une sortie (29), dans lequel une zone de détection (14) d'au moins un détecteur (15) est disposé entre l'au moins un contenant (3) et l'au moins une sortie (29) pour distinguer entre le liquide (9) et l'air (7), le dispositif de dosage (32) présentant un appareil de convoyage (1) destiné à convoyer du liquide (9) et/ou de l'air (7) ainsi que des moyens, lesquels sont exécutés pour exécuter le procédé selon l'une quelconque des revendications précédentes.

11. Dispositif de dosage (32) selon la revendication précédente, dans lequel est disposé dans ou sur l'au moins un contenant (3) au moins un support de données (48), sur lequel le volume initial (13) en liquide (9) est stocké dans le contenant (3).

12. Dispositif de dosage (32) selon la revendication 10 ou 11, dans lequel au moins une entrée (28) d'un trajet de convoyage (47) est prévue, dans lequel de préférence
- l'au moins une entrée (28) est disposée dans ou sur l'au moins un contenant (3), et/ou
- la zone de détection (14) est disposée dans l'au moins un quart, de manière préférée un huitième et de manière particulièrement préférée un dixième jouxtant au moins une entrée (28), du trajet de convoyage (47).

13. Dispositif de dosage (32) selon l'une quelconque des revendications 10 à 12, dans lequel
- l'au moins un contenant (4) peut être accouplé au dispositif de dosage (32) au moyen d'une unité d'accueil (2), et/ou
- un insert (22) est disposé dans l'au moins un contenant (3), dans lequel de manière particulièrement préférée l'au moins un support de données (48) est disposé sur l'insert (22).

14. Dispositif de dosage (32) selon l'une quelconque des revendications 10 à 13, dans lequel le dispositif de dosage (32) présente au moins un appareil de lecture (50) destiné à lire, en particulier sans contact, l'au moins un support de données (48), dans lequel de manière particulièrement préférée l'au moins un appareil de lecture (50) est formé de plus en tant qu'appareil d'écriture.

15. Dispositif de dosage (32) selon l'une quelconque des revendications 10 à 14, dans lequel au moins deux contenants (3) et au moins deux appareils de convoyage (1) sont prévus, et respectivement un appareil de convoyage (1) est prévu par contenant (3), de préférence dans lequel le liquide (9) peut être convoyé dans un distributeur de rinçage (46) au moyen de l'appareil de convoyage (1), dans lequel de manière particulièrement préférée le liquide (9) peut être convoyé depuis le distributeur de rinçage (46) par l'intermédiaire d'un milieu de rinçage, en particulier d'eau, par ailleurs vers l'au moins un appareil cible (49).
